# EUROPEAN PATENT APPLICATION

(11) **EP 4 425 100 A1**
(43) Date of publication of application: **04.09.2024**
(21) Application number: 21962489.7
(22) Date of filing: 29.10.2021
(51) Int. Cl.: G01C 21/26, G01C 21/36

(54) **VOICE OUTPUT DEVICE, VOICE OUTPUT METHOD, PROGRAM, AND STORAGE MEDIUM**

(71) Applicant: Pioneer Corporation, Tokyo 113-0021 (JP)
(72) Inventor: IZUMI, Shota, Kawagoe-shi, Saitama 350-8555 (JP); IWATA, Masahiro, Kawagoe-shi, Saitama 350-8555 (JP); ONUMA, Yohei, Kawagoe-shi, Saitama 350-8555 (JP); FUKUI, Kotaro, Kawagoe-shi, Saitama 350-8555 (JP)
(74) Representative: Viering, Jentschura & Partner mbB Patent- und Rechtsanwälte
(86) International application number: PCT/JP2021/040102
(87) International publication number: WO 2023/073948

(57) **Abstract**

The voice output device includes an utterance setting unit, a determination unit and a voice overlap prevention unit. The utterance setting unit sets a plurality of utterance points and a plurality of utterance contents for the plurality of utterance points, based on a route a destination of a vehicle. The determination unit determines whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route. The voice overlap prevention unit performs processing for preventing overlap of the first voice output and the second voice output, based on a priority set in advance, when it is determined that the first voice output and the second voice output overlap.

## Description

### TECHNICAL FIELD

The present invention relates to a technique available in voice guidance for a vehicle.

### BACKGROUND TECHNIQUE

As an apparatus for guiding a route to a destination of a vehicle by voice, there is known a navigation device for a vehicle as disclosed in Patent Document 1, for example.

### RELATED ART REFERENCE

### PATENT REFERENCE

Patent Document 1: Japanese Patent Application Laid-open under No. 2010-14653

### SUMMARY OF THE INVENTION

### PROBLEM TO BE SOLVED BY THE INVENTION

According to the voice guidance for a vehicle, for example, in a section in which the vehicle is traveling at a high speed range on the route to the destination, there is a case where the voice guidance is outputted in an overlapped manner. In such a case, there may be such problems that it becomes difficult to sufficiently grasp the contents of the guidance, and it imposes an unnecessary mental burden on the user who uses the voice guidance for the vehicle.

Patent Document 1 does not specifically disclose the aforementioned problems and the like. Therefore, according to the configuration disclosed in Patent Document 1, there still exist the aforementioned problems.

The present invention has been made to solve the above problems, and a main object thereof is to provide a voice output device capable of reducing the mental burden of the user who uses the voice guidance for the vehicle.

### MEANS FOR SOLVING THE PROBLEM

An invention described in claims is a voice output device comprising: an utterance setting unit configured to set a plurality of utterance points and a plurality of utterance contents for the plurality of utterance points, based on a route a destination of a vehicle; a determination unit configured to determine whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and a voice overlap prevention unit configured to perform processing for preventing overlap of the first voice output and the second voice output, based on a priority set in advance, when it is determined that the first voice output and the second voice output overlap.

An invention described in claims is a voice output method comprising: setting a plurality of utterance points and a plurality of utterance contents for the plurality of utterance points, based on a route to a destination of a vehicle; determining whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and performing processing for preventing overlap of the first voice output and the second voice output, based on a priority set in advance, when it is determined that the first voice output and the second voice output overlap.

An invention described in claims is a program executed by a voice output device comprising a computer, the program causing the computer to: set a plurality of utterance points and a plurality of utterance contents for the plurality of utterance points, based on a route to a destination of a vehicle; determine whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and perform processing for preventing overlap of the first voice output and the second voice output, based on a priority set in advance, when it is determined that the first voice output and the second voice output overlap.

### BRIEF DESCRIPTION OF THE DRAWINGS

[FIG. 1] FIG. 1 is a diagram showing a configuration example of a voice output system according to an embodiment.
[FIG. 2] FIG. 2 is a block diagram showing a schematic configuration of a voice output device.
[FIG. 3] FIG. 3 is a block diagram showing a schematic configuration of a server device.
[FIG. 4] FIG. 4 is a diagram explaining a specific example of processing performed during route guidance.
[FIG. 5] FIG. 5 is a flowchart describing the processing performed in the server device during route guidance.

### MODES FOR EXERCISING THE INVENTION

According to one aspect of the present invention, there is provided a voice output device comprising: an utterance setting unit configured to set a plurality of utterance points and a plurality of utterance contents for the plurality of utterance points, based on a route a destination of a vehicle; a determination unit configured to determine whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and a voice overlap prevention unit configured to perform processing for preventing overlap of the first voice output and the second voice output, based on a priority set in advance, when it is determined that the first voice output and the second voice output overlap.

The above voice output device includes an utterance setting unit, a determination unit and a voice overlap prevention unit. The utterance setting unit sets a plurality of utterance points and a plurality of utterance contents for the plurality of utterance points, based on a route a destination of a vehicle. The determination unit determines whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route. The voice overlap prevention unit performs processing for preventing overlap of the first voice output and the second voice output, based on a priority set in advance, when it is determined that the first voice output and the second voice output overlap. Thus, it is possible to reduce the mental burden of the user using the voice guidance for the vehicle.

In one mode of the above voice output device, when the speed of the vehicle traveling along the route exceeds a speed value obtained by a predetermined calculation method, the determination unit determines that the first voice output corresponding to the first utterance content at the first utterance point among the plurality of utterance points and the second voice output corresponding to the second utterance content at the second utterance point among the plurality of utterance points overlap at least partly.

In another mode of the above voice output device, the speed value is a value obtained by dividing a distance from the first utterance point to the second utterance point by an utterance time of the first voice output.

In still another mode of the above voice output device, the voice overlap prevention unit performs, as the process for preventing the overlap based on the priority, processing for reducing a sentence of the first utterance content until the utterance time of the first voice output falls within an expected arrival time of the vehicle to the second utterance point.

In still another mode of the above voice output device, the plurality of utterance points are set as positions indicating timings capable of performing the voice outputs corresponding to the plurality of utterance contents without overlap in the vehicle that is assumed to travel at a speed equal to or lower than a predetermined speed.

In still another mode of the above voice output device, the priority is set such that, among the first utterance point and the second utterance point, one voice output corresponding to the utterance content of one guidance point closer to the guidance point ahead of the vehicle on the route is preferentially performed.

In still another mode of the above voice output device, the voice overlap prevention unit performs, as the processing for preventing the overlap based on the priority, processing for stopping another voice output corresponding to the utterance content of another utterance point farther from the guide point at a timing when the one voice output is started, among the first utterance point and the second utterance point.

In still another mode of the above voice output device, the priority is set so that the voice output of information important for moving the vehicle along the route is preferentially performed.

In still another mode of the above voice output device, the voice overlap preventing unit performs, as the processing for preventing the overlap based on the priority, processing for shortening at least one of the first utterance content and the second utterance content.

According to another aspect of the present invention, there is provided a voice output method comprising: setting a plurality of utterance points and a plurality of utterance contents for the plurality of utterance points, based on a route to a destination of a vehicle; determining whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and performing processing for preventing overlap of the first voice output and the second voice output, based on a priority set in advance, when it is determined that the first voice output and the second voice output overlap. Thus, it is possible to reduce the mental burden of the user using the voice guidance for the vehicle.

According to still another aspect of the present invention, there is provided a program executed by a voice output device comprising a computer, the program causing the computer to: set a plurality of utterance points and a plurality of utterance contents for the plurality of utterance points, based on a route to a destination of a vehicle; determine whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and perform processing for preventing overlap of the first voice output and the second voice output, based on a priority set in advance, when it is determined that the first voice output and the second voice output overlap. By executing this program on a computer, the above-described voice output device can be realized. The program can be stored in a storage medium for use.

### EMBODIMENTS

Preferred embodiments of the present invention will be described below with reference to the attached drawings.

### [System configuration]

### (Overall configuration)

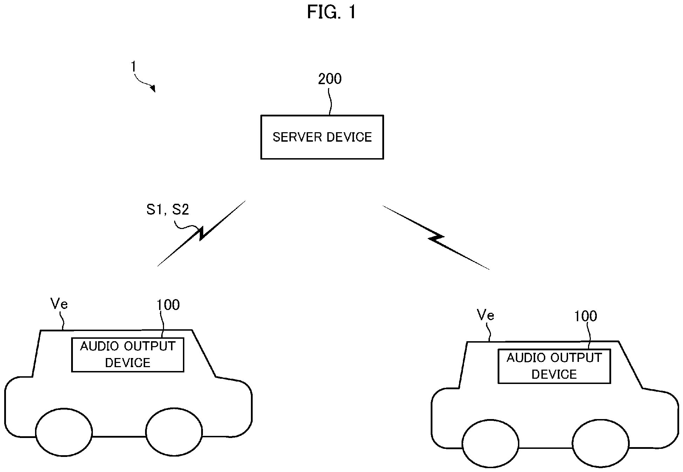

FIG. 1 is a diagram showing a configuration example of a voice output system according to embodiments. The voice output system 1 according to the embodiments includes voice output devices 100 and a server device 200. The voice output device 100 is mounted on a vehicle Ve. The server device 200 communicates with a plurality of voice output devices 100 mounted on a plurality of vehicles Ve.

The voice output device 100 basically performs route guidance processing and information providing processing for a user who is a passenger of the vehicle Ve. For example, when a destination or the like is inputted by the user, the voice output device 100 transmits an upload signal S1 including the position information of the vehicle Ve and the information on the designated destination to the server device 200. The server device 200 refers to the map data, calculates a route to the destination, and transmits a control signal S2 indicating the route to the destination to the voice output device 100. The voice output device 100 performs the route guidance for the user by the voice output, based on the received control signal S2.

Also, the voice output device 100 provides various kinds of information to the user by interacting with the user. For example, when the user makes an information request, the voice output device 100 supplies the server device 200 with the upload signal S1 including information indicating the content or type of the information request and information about the driving state of the vehicle Ve. The server device 200 acquires, generates, and transmits the data requested by the user to the voice output device 100 as the control signal S2 . The voice output device 100 provides the received information to the user by the voice output.

### (Voice output device)

The voice output device 100 moves with the vehicle Ve, and provides voice-based route guidance so that the vehicle Ve travels along the guidance route. Note that "voice-based route guidance" refers to the route guidance in which the user can grasp information required for driving the vehicle Ve along the guidance route at least from voice only, and does not exclude that the voice output device 100 supplementally displays a map or the like around the current position. In the present embodiment, the voice output device 100 outputs various information related to the driving, such as a point on the route at which the guidance is required (also referred to as a "guidance point"), by voice. Here, the guidance point corresponds to, for example, an intersection with a right and left turn of the vehicle Ve, or other important passing points for the vehicle Ve to travel along the guidance route. The voice output device 100 performs voice guidance about the guidance point such as the distance from the vehicle Ve to the next guidance point and the direction of travel at the guidance point, for example. Hereinafter, the voice related to the guidance route is also called "route guidance voice".

The voice output device 100 is mounted, for example, on the top of a windshield or on a dashboard of the vehicle Ve. Incidentally, the voice output device 100 may be incorporated into the vehicle Ve.

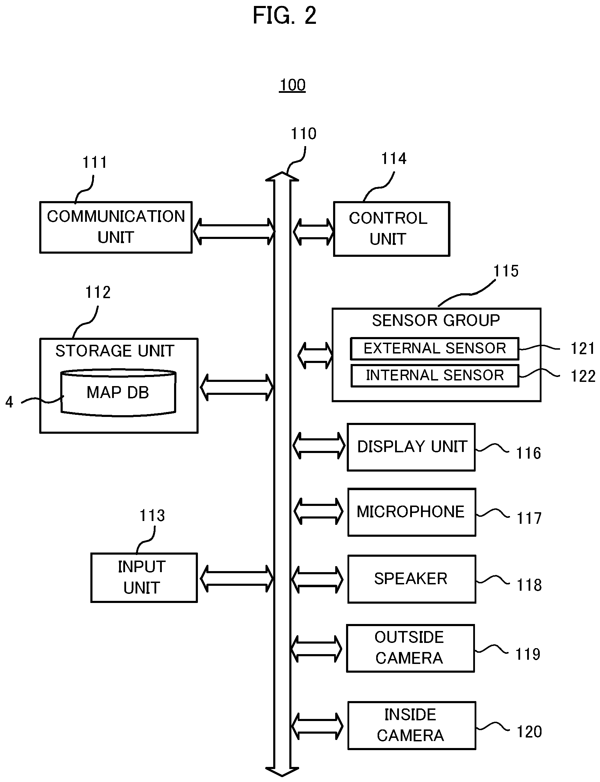

FIG. 2 is a block diagram showing the schematic configuration of the voice output device 100. The voice output device 100 mainly includes a communication unit 111, a storage unit 112, an input unit 113, a control unit 114, a sensor group 115, a display unit 116, a microphone 117, a speaker 118, an outside camera 119, and an inside camera 120. Each element in the voice output device 100 is connected to one another via a bus line 110.

The communication unit 111 performs data communication with the server device 200 based on the control of the control unit 114. The communication unit 111 may receive map data for updating a map DB (DataBase) 4 to be described later from the server device 200, for example.

The storage unit 112 is composed of various memories such as a RAM (Random Access Memory), a ROM (Read Only Memory), a non-volatile memory (including a hard disk drive, a flash memory, etc.). The storage unit 112 stores programs for the voice output device 100 to execute a predetermined processing. The above-described programs may include an application program for performing the route guidance, an application program for playing music, an application program for outputting contents (such as a TV) other than music, and the like. The storage unit 112 is also used as a working memory of the control unit 114. The programs to be executed by the voice output device 100 may be stored in a storage medium other than the storage unit 112.

The storage unit 112 stores the map database (hereinafter, the database is referred to as "DB") 4. The map DB 4 stores various data required for the route guidance. The map DB 4 stores, for example, road data representing the road network by a combination of nodes and links, and facility data indicating facilities that are candidates for a destination, a stopover place, and a landmark. The map DB 4 may be updated based on the map information that the communication unit 111 receives from the map management server under the control of the control unit 114.

The input unit 113 is a button, a touch panel, a remote controller, or the like for the user to make an operation. The display unit 116 is a display that performs display based on the control of the control unit 114. The microphone 117 collects the sound in the vehicle Ve, particularly the utterance of the driver or the like. The speaker 118 outputs route guidance voices to the driver or the like.

The sensor group 115 includes an external sensor 121 and an internal sensor 122. The external sensor 121 includes one or more sensors, such as a lidar, radar, ultrasonic sensor, infra-red sensor, sonar, and the like, for recognizing the surrounding environment of the vehicle Ve. The internal sensor 122 is a sensor that performs positioning of the vehicle Ve, and is a GNSS (Global Navigation Satellite System) receiver, a gyro sensor, an IMU (Inertial Measurement Unit), a vehicle speed sensor, or the combination thereof, for example. The sensor group 115 may include a sensor by which the control unit 114 can derive the position of the vehicle Ve directly or indirectly (i.e., by performing an estimation process) from the outputs of the sensor group 115.

The outside camera 119 is a camera for shooting the outside of the vehicle Ve. The outside camera 119 may be only a front camera that shoots the front of the vehicle, may include a rear camera that shoots the rear of the vehicle in addition to the front camera, and may be an omnidirectional camera that can shoot all around the vehicle Ve. On the other hand, the inside camera 120 is a camera for shooting the interior of the vehicle Ve, and is provided at a position capable of shooting at least the area around the driver's seat.

The control unit 114 includes a CPU (Central Processing Unit), a GPU (Graphics Processing Unit) and controls the entire voice output device 100. For example, the control unit 114 estimates the position (including the direction of the traveling direction) of the vehicle Ve based on the output of one or more sensors of the sensor group 115. When the destination is designated by the input unit 113 or the microphone 117, the control unit 114 generates the route information indicating the guidance route to the destination and performs the route guidance based on the route information, the estimated position information of the vehicle Ve, and the map DB 4. In this case, the control unit 114 outputs the route guidance voice from the speaker 118. The control unit 114 controls the display unit 116 to display information of the music being played back, video contents, or a map around the current position.

The processing executed by the control unit 114 is not limited to being implemented by software based on a program, but may be implemented by any combination of hardware, firmware, and software. The processing executed by the control unit 114 may be implemented by a user-programmable integrated circuit such as a FPGA (field-programmable gate array) or a microcomputer. In that case, the program executed by the control unit 114 in this embodiment may be realized by using this integrated circuit. Thus, the control unit 114 may be implemented by hardware other than a processor.

The configuration of the voice output device 100 shown in FIG. 2 is an example, and various changes may be made to the configuration shown in FIG. 2. For example, instead of storing the map DB 4 in the storage unit 112, the control unit 114 may receive information required for the route guidance from the server device 200 through the communication unit 111. In another example, instead of including the speaker 118, the voice output device 100 may be connected to a voice output unit configured separately from the voice output device 100 by an electrical or known communication means to output the voice from the voice output unit. In this case, the voice output unit may be a speaker provided in the vehicle Ve. In yet another example, the voice output device 100 may not include the display 116. In this case, the voice output device 100 may perform no control related to the display at all, or may perform a predetermined display by electrically connecting to the on-vehicle display unit provided in the vehicle Ve by wired or wireless communication. Similarly, instead of including the sensor group 115, the voice output device 100 may acquire information outputted from the sensors attached to the vehicle Ve from the vehicle Ve, using a communication protocol such as a CAN (Controller Area Network).

### (Server device)

Based on the upload signal S1 including the destination or the like received from the voice output device 100, the server device 200 generates the route information indicating the guidance route that the vehicle Ve should travel. Then, the server device 200 generates the control signal S2 related to the information output for the information request of the user based on the information request of the user indicated by the upload signal S1 transmitted by the voice output device 100 thereafter and the traveling state of the vehicle Ve. Then, the server device 200 transmits the generated control signal S2 to the voice output device 100.

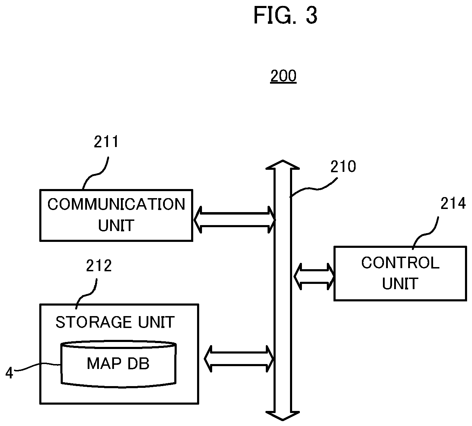

FIG. 3 is a diagram illustrating an example of the schematic configuration of the server device 200. The server device 200 mainly includes a communication unit 211, a storage unit 212, and a control unit 214. Each element in the server device 200 is interconnected via a bus line 210.

The communication unit 211 performs data communication with an external device such as the voice output device 100 based on the control of the control unit 214. The storage unit 212 is configured by various memories such as a RAM, a ROM, a non-volatile memory (including a hard disk drive, a flash memory, etc.). The storage unit 212 stores programs for the server device 200 to execute predetermined processing. The storage unit 212 includes the map DB 4.

The control unit 214 includes a CPU, a GPU and the like, and controls the entire server device 200. The control unit 214 operates together with the voice output device 100 by executing a program stored in the storage unit 212, and executes route guidance processing, information providing processing, or the like for the user. For example, the control unit 214 generates the control signal S2 related to the route information indicating the guidance route or the information output in response to the information request of the user, based on the upload signal S1 received from the voice output device 100 through the communication unit 211. Then, the control unit 214 transmits the generated control signal S2 to the voice output device 100 through the communication unit 211.

### [Processing related to utterance]

Subsequently, processing related to utterance performed in the present embodiment will be described.

### (Setting utterance points and utterance contents)

First, processing related to the setting of the utterance points and the utterance contents will be described.

When the route guidance is started in the vehicle Ve, the server device 200 acquires the guidance route from the current position of the vehicle Ve to the destination (hereinafter, referred to as a route MR) based on the map DB 4 stored in the storage unit 212 and the driving state information of the vehicle Ve received in the communication unit 211.

The driving state information includes information indicating the current driving state of the vehicle Ve. Specifically, the driving state information includes, for example, the current position of the vehicle Ve, the destination of the vehicle Ve, and the speed of the vehicle Ve. Further, the driving state information may include information that can be acquired based on the function of each part of the voice output device 100, such as the direction of the vehicle Ve, the traffic information around the position of the vehicle Ve (including the speed regulation and the traffic jam information, etc.), and the present time. Further, the driving state information may include any one of the sound obtained by the microphone 117, an image captured by the outside camera 119, and an image captured by the inside camera 120. Further, the driving state information may include information received from the server device 200 through the communication unit 111.

Next, the server device 200 sets a plurality of guidance points, a plurality of utterance points corresponding to the plurality of guidance points, and a plurality of utterance contents at the plurality of utterance points on the route MR.

The plurality of utterance contents described above are set to include information at least for guiding the vehicle Ve to the next guidance point. Further, the plurality of utterance points described above are set as the positions indicating a timing at which the voice output according to each of the plurality of utterance contents can be performed without overlap in the voice output device of the vehicle Ve which is supposed to travel at a speed equal to or lower than a predetermined speed (for example, the legal speed).

### (Outline of the processing performed during route guidance)

Next, the outline of the processing performed during the route guidance will be described. In the following description of the outline, it is assumed that a plurality of utterance points including an utterance point SPX and an utterance point SPY are set in a section connecting two neighboring guidance points on the route MR, that the utterance content SCX at the utterance point SPX is set, and that the utterance content SCY at the utterance point SPY is set. Further, in the following description of the outline, it is assumed that the vehicle Ve passes through the relatively farther utterance point SPX from the guidance point ahead of the vehicle Ve on the route MR and then passes through the relatively nearer utterance point SPY from the guidance point. Further, the processing according to the explanation of the outline below is to be performed in a condition in which the current position of the vehicle Ve traveling along the route MR is constantly detected on the basis of the driving state information of the vehicle Ve.

For example, immediately before the vehicle Ve passes through the utterance point SPX, the server device 200 determines whether or not the voice output SOX overlaps the voice output SOY corresponding to the utterance content SCY at least partly, based on the speed of the vehicle Ve included in the driving state information received from the voice output device 100.

The server device 200 determines that the voice output SOX and the voice output SOY do not overlap when the speed of the vehicle Ve immediately before passing through the utterance point SPX is equal to or lower than the speed value Vth obtained by dividing the distance from the utterance point SPX to the utterance point SPY by the utterance time of the voice output SOX. In that case, when the vehicle Ve passes through the utterance point SPX, the server device 200 outputs the guidance voice data for performing the voice output SOX corresponding to the utterance content SCX to the voice output device 100. Thereafter, when the vehicle Ve passes through the utterance point SPY, the server device 200 outputs the guidance voice data to the voice output device 100 to perform the voice output SOY corresponding to the utterance content SCY.

When the speed of the vehicle Ve immediately before passing through the utterance point SPX exceeds the speed value Vth, the server device 200 determines that the voice output SOX and the voice output SOY overlap at least partly. In that case, the server device 200 performs processing for preventing overlap of the voice output SOX and the voice output SOY based on the priority set in advance.

Specifically, when the vehicle Ve passes through the utterance point SPX, the server device 200 outputs the guidance voice data for performing the voice output SOX to the voice output device 100. Thereafter, based on the priority PRA, for example, when the vehicle Ve passes through the utterance point SPY, the server device 200 stops the voice output SOX and outputs the voice data for performing the voice output SOY to the voice output device 100. In other words, based on the priority PRA, the server device 200 performs processing of stopping the voice output SOX corresponding to the utterance content SCX of the utterance point SPX at the timing when the voice output SOY is started. The priority PRA may be set such that one voice output corresponding to the utterance content of one utterance point relatively close to the guidance point ahead of the vehicle Ve on the route MR is preferentially performed. That is, according to the present embodiment, as the processing for preventing the overlap of the voice output SOX and the voice output SOY based on the priority PRA, the server device 200 may perform processing for stopping the voice output SOX corresponding to the utterance content of the relatively far utterance point SPX from the guidance point ahead of the vehicle Ve on the route MR at the timing when the voice output SOY is started. Further, when performing the above-described processing based on the priority PRA, the server device 200 may determine whether or not the voice output SOX and the voice output SOY overlap at least partly depending on whether or not the speed of the vehicle Ve at any timing belonging to the period from immediately before passing through the utterance point SPX to immediately before passing through the utterance point SPY exceeds the speed value Vth.

Alternatively, for example, when the vehicle Ve passes through the utterance point SPX, the server device 200 may perform processing of acquiring the utterance content SCXA by shortening the utterance content SCX based on the priority PRB, and outputs the guidance voice data to the voice output device 100 to perform the voice output SOXA corresponding to the utterance content SCXA instead of the voice output SOX. Further, for example, when the vehicle Ve passes through the utterance point SPY, the server device 200 performs processing of acquiring the utterance content SCYA by shortening the utterance content SCY based on the priority PRB, and outputs the guidance voice data to the voice output device 100 to perform the voice output SOYA corresponding to the utterance content SCYA. The priority PRB may be set so that important information for moving the vehicle Ve along the route MR is preferentially outputted. More specifically, the priority PRB may be set such that, for example, information relating to the operation of the vehicle Ve (right-left turn, etc.) to be performed at the next guidance point has a first priority, information relating to the operation of the vehicle Ve (lane change, etc.) which is better to be performed when approaching the next guidance point has a second priority, and other information relating to the next guidance point (mark, etc.) has a third priority. Further, the processing of shortening the utterance content may include, for example, any of shortening of word units such as changing "kilometer" to "kilo", shortening of phrase units such as deleting one phrase of a plurality of phrases, and shortening of sentence units such as deleting one sentence of a plurality of sentences.

According to the present embodiment, the server device 200 may perform processing for shortening at least one of the utterance content SCX and the utterance content SCY as the processing for preventing overlap of the voice output SOX and the voice output SOY based on the priority PRB. In other words, as the processing for preventing overlap of the utterance output SOX and the utterance output SOY based on the priority PRB, the server device 200 may perform at least one of the processing for acquiring the utterance content SCXA by shortening the utterance content SCX and the processing for acquiring the utterance content SCYA by shortening the utterance content SCY. Therefore, according to the present embodiment, the server device 200 can perform the voice output SOXA when the vehicle Ve passes through the utterance point SPX and perform the voice output SOY when the vehicle Ve passes through the utterance point SPY. Further, according to the present embodiment, the server device 200 can performs the voice output SOX when the vehicle Ve passes through the utterance point SPX and perform the voice output SOYA when the vehicle Ve passes through the utterance point SPY.

### (Specific example of processing performed during route guidance)

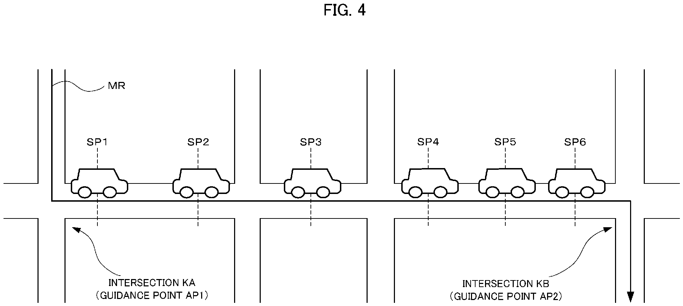

Next, a specific example of the processing performed during the route guidance will be described. In the following description of the specific example, as shown in FIG. 4, it is assumed that the guidance point AP1 is set to the intersection KA on the guidance route MR and the guidance point AP2 is set to the intersection KB which is closer to the destination than the intersection KA on the guidance route MR. Further, in the following description of the specific example, as shown in FIG. 4, it is assumed that six utterance point SP 1 to SP6 are set in the section connecting the guidance point AP1 and the guidance point AP2. In the following specific example, it is assumed that the utterance contents SC1 to SC6 are set for the utterance points SP 1 to SP6 in advance. Further, in the following description of the specific example, it is assumed that vehicle Ve traveling along the route MR passes through the utterance points SP1, SP2, SP3, SP4, SP5 and SP6 in this order. Further, the processing according to the following description of the specific example is performed in a condition in which the current position of the vehicle Ve traveling along the route MR is constantly detected on the basis of the driving state information of the vehicle Ve. FIG. 4 is a diagram for explaining the specific example of processing performed during route guidance.

When the vehicle Ve passes through the utterance point SP1 set at the position immediately after turning left at the intersection KA (the guidance point AP1), the server device 200 outputs the guidance voice data to the voice output device 100 to perform the voice output SO1 corresponding to the utterance content SC1 in the vehicle Ve.

The utterance point SP1 is set at the position farthest from the intersection KB (the guidance point AP2) among the utterance points SP 1 to SP6. In addition, for example, when the time required to travel from the utterance point SP1 to the intersection KB (the guidance point AP2) is shorter than 5 minutes for the vehicle Ve running at a speed lower than the legal speed, the utterance content SC1 is set in advance as a script such as "You entered the Kawagoe street. Turn right 2 km ahead.". Also, when the time required to travel from the utterance point SP1 to the intersection KB (the guidance point AP2) is equal to or longer than 5 minutes for the vehicle Ve traveling at a speed lower than the legal speed, the utterance content SC1 is set in advance as a script such as "You entered the Kawagoe street. Go straight for about 10 minutes.", for example.

When the vehicle Ve passes through the utterance point SP2 next to the utterance point SP1, the server device 200 outputs the guidance voice data to the voice output device 100 for performing the voice output SO2 corresponding to the utterance content SC2 in the vehicle Ve.

The utterance point SP2 is set at the position fifth closest to the intersection KB (the guidance point AP2) among the utterance points SP1 to SP6. For example, when the time required to travel from the utterance point SP2 to the intersection KB (the guidance point AP2) is less than 5 minutes in the vehicle Ve traveling at a speed lower than the legal speed, the utterance content SC2 is set in advance as a script such as "Turn right one kilometer ahead.". In addition, for example, when the time required to travel from the utterance point SP2 to the intersection KB (the guidance point AP2) is more than 5 minutes in the vehicle Ve traveling at a velocity lower than the legal speed, the utterance content SC2 is set in advance as a script such as "Go straight for about 10 minutes. You will pass a large home center soon."

When the vehicle Ve passes through the utterance point SP3 next to the utterance point SP2, the server device 200 outputs the guidance voice data to the voice output device 100 for performing the voice output SO3 corresponding to the utterance content SC3 in the vehicle Ve.

The utterance point SP3 is set to a position fourth closest to the intersection KB (the guidance point AP2) among the utterance points SP1 to SP6. In addition, the utterance content SC3 is set in advance as a script such as "Turn right at the second traffic signal." or "Turn right at the second intersection."

Immediately before the vehicle Ve passes the utterance point SP4 next to the utterance point SP3, the server device 200 determines whether or not the voice output SO4 and the voice output SO5 corresponding to the utterance content SC5 at the next utterance point SP5 next to the utterance point SP4 overlap at least partly, on the basis of the speed of the vehicle Ve included in the driving state information received from the voice output device 100.

The utterance point SP4 is set to a position third closest to the intersection KB (the guidance point AP2) among the utterance points SP1 to SP6. In addition, the utterance content SC4 is set in advance as a script, for example, "Turn right 400m ahead. Gas station is the mark. Go toward Kawagoe direction. After that, turn left." or "Turn right 400m ahead. Gas station is the mark. Enter the Ome street. After that, turn left."

The utterance point SP5 is set to a position second closest to the intersection KB (the guidance point AP2) among the utterance points SP1 to SP6. Also, the utterance content SC5 is set in advance as a script, for example, "Soon turn right at the traffic signal. Go ahead in the right lane."

When the speed of the vehicle Ve immediately before passing through the utterance point SP4 exceeds the speed value Vth4 obtained by dividing the distance from the utterance point SP4 to the utterance point SP5 by the utterance time according to the voice output SO4, the server device 200 determines that the voice output SO4 and the voice output SO5 overlap at least partly. Then, the server device 200 performs processing to prevent overlap of the voice output SO4 and the voice output SO5 based on the priority PRA or PRB.

Specifically, when the vehicle Ve passes through the utterance point SP4, the server device 200 outputs the guidance voice data to the voice output device 100 for performing the voice output SO4. Thereafter, when the vehicle Ve passes through the utterance point SP5, the server device 200 stops the voice output SO4 and outputs the guidance voice data to the voice output device 100 to perform the voice output SO5 on the basis of the priority PRA. According to this control, when the vehicle Ve passes through the utterance point SP5, for example, the voice output SO4 is shortened to "Turn right 400m ahead. Gas station is the mark.", and the voice output SO5 "Soon turn right at the traffic signal. Go ahead in the right lane." is started.

Alternatively, when the vehicle Ve passes through the utterance point SP4, the server device 200 performs processing of acquiring the utterance content SC4A by shortening the utterance content SC4 based on the priority PRB, and outputs the guidance voice data to the voice output device 100 to perform the voice output SO4A corresponding to the utterance content SC4A instead of the voice output SO4. Further, for example, when the vehicle Ve passes through the utterance point SP5, the server device 200 performs processing of acquiring the utterance content SC5A by shortening the utterance content SC5 based on the priority PRB, and outputs the guidance voice data to the voice output device 100 to perform the voice output SO5A corresponding to the utterance content SC5A instead of the voice output SO5. According to the above processing and control, for example, when the vehicle Ve passes through the utterance point SP4, a voice outputting SO4A such as "Turn right 400m ahead. Then, turn left immediately." is performed. In addition, according to the above-described processing and control, for example, when the vehicle Ve passes the utterance point SP5, a voice output SO5A such as "Soon turn right, and go ahead in the right lane." is performed.

According to the present embodiment, when the server device 200 determines that the voice output SO4 and the voice output SO5 overlap at least partly, the server device 200 may perform processing of shortening the utterance content SC4 based on the priority PRC different from the priority PRA and PRB and an expected arrival time of the vehicle Ve to the utterance point SP5.

Specifically, the server device 200 shortens the utterance content SC4 by shortening the sentence of the utterance content SO4 according to the priority PRC until the utterance time of the voice output SO4 corresponding to the utterance content SC4 falls within the expected arrival time of the vehicle Ve to the utterance point SP5. More specifically, if the utterance content SC4 is "Turn right 400m ahead. Gas station is the mark. Go toward Kawagoe direction. After that, turn left.", the server device 200 shortens the utterance content SC4 by deleting the sentences in the order of "After that, turn left.", " Go toward Kawagoe direction." and "Gas station is the mark.". In the priority PRC, the sentence "Turn right 400m ahead." corresponding to the main part of the utterance content SC4 is excluded from the target of reduction. Further, the order of reduction included in the priority PRC may be set such that each sentence other than the main part of the utterance content SC4 is sequentially reduced from the tail side to the head side of the utterance content SC4.

On the other hand, when the speed of the vehicle Ve immediately before passing through the utterance point SP4 is equal to or lower than the speed value Vth4, the server device 200 determines that the voice output SO4 and the voice output SO5 do not overlap. Therefore, the voice output SO4 is started when the vehicle Ve passes through the utterance point SP4, and the voice output SO4 is completed before the vehicle Ve passes through the utterance point SP5. Thereafter, immediately before the vehicle Ve passes through the utterance point SP5, the server device 200 determines whether or not the voice output SO5 and the voice output SO6 corresponding to the utterance content SC6 at the utterance point SP6 next to the utterance point SP5 overlap on the basis of the speed of the vehicle Ve included in the driving state information received from the voice output device 100.

The utterance point SP6 is set to a position closest to the intersection KB (the guidance point AP2) among the utterance points SP1 to SP6. Also, the utterance content SC6 is set in advance as a script, for example, "Turn right at the traffic signal. Then, go in the left lane."

When the speed of the vehicle Ve immediately before passing through the utterance point SP5 exceeds the speed value Vth5 obtained by dividing the distance from the utterance point SP5 to the utterance point SP6 by the utterance time of the voice output SO5, the server device 200 determines that the voice output SO5 and the voice output SO6 overlap at least partly. The server device 200 performs processing to prevent overlap of the voice output SO5 and the voice output SO6 based on the priority PRA or PRB.

Specifically, when the vehicle Ve passes through the utterance point SP5, the server device 200 outputs the guidance voice data to the voice output device 100 to perform the voice output SO5. Thereafter, when the vehicle Ve passes through the utterance point SP6, the server device 200 stops the voice output SO5 and outputs the guidance voice data to the voice output device 100 to perform the voice output SO6 on the basis of the priority PRA. According to this control, when the vehicle Ve passes through the utterance point SP6, for example, the voice output SO5 is terminated after "Soon turn right at the traffic signal." is outputted, and the voice output SO6 "Turn right at the traffic signal. Then, go on the left lane" is started.

According to the above-described processing, in a section on the route MR in which the vehicle Ve is traveling at a speed exceeding the speed value (Vth4 and Vth5) obtained by the predetermined calculation method, it is possible to prevent overlap of the voice outputs corresponding to the utterance contents.

### (Processing flow)

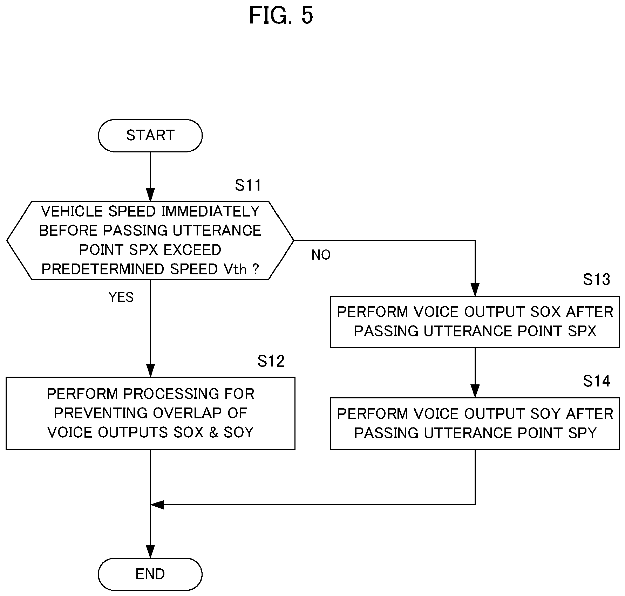

Next, processing performed in the server device 200 during the route guidance will be described. FIG. 5 is a flowchart illustrating processing performed in a server device during the route guidance. The description of the following processing flow shall be in accordance with the description in the above section of "Outline of the processing performed during route guidance".

The control unit 214 of the server device 200 determines whether or not the speed of the vehicle Ve immediately before passing through the utterance point SPX exceeds the speed value Vth based on the driving state information of the vehicle Ve (Step S11).

When it is determined that the speed of the vehicle Ve immediately before passing through the utterance point SPX exceeds the speed value Vth (step S11: YES), the control unit 214 determines that the voice output SOX and the voice output SOY overlap at least partly. Then, the control unit 214 performs a process for preventing overlap of the voice output SOX and the voice output SOY based on the preset priority PRA or PRB (step S12).

Specifically, when the vehicle Ve passes through the utterance point SPX, the control unit 214 outputs the guidance voice data to the voice output device 100 to perform the voice output SOX. Thereafter, the control unit 214 performs a process of stopping the voice output SOX corresponding to the utterance content SCX of the utterance point SPX at a timing at which the voice output SOY is started, i.e., at a timing at which the vehicle Ve passes through the utterance point SPY, as the process of step S12 based on the priority PRA.

Alternatively, the control unit 214 performs a process of shortening at least one of the utterance content SCX and the utterance content SCY as the process of step S12 based on the priority PRB, and performs a process of performing the voice output corresponding to the utterance content obtained by the process.

In a case where the process of shortening the utterance content SCX to the utterance content SCXA is performed in step S12, the voice output SOXA corresponding to the utterance content SCXA is performed when the vehicle Ve passes through the utterance point SPX. In a case where the process of shortening the utterance content SCY to the utterance content SCYA is performed in step S12, the voice output SOYA corresponding to the utterance content SCYA is performed when the vehicle Ve passes through the utterance point SPY.

On the other hand, when it is determined that the speed of the vehicle Ve immediately before passing through the utterance point SPX is equal to or lower than the speed value Vth (step S11: NO), the control unit 214 determines that the voice output SOX and the voice output SOY do not overlap. Thereafter, the control unit 214 performs a process for performing the voice output SOX when the vehicle Ve passes through the utterance point SPX (step S13), and performs a process for performing the voice output SOY when the vehicle Ve passes through the utterance point SPY (step S14).

According to the present embodiment, the control unit 214 of the server device 200 has functions as an utterance setting unit, a determination unit, and a voice overlap prevention unit.

As described above, according to the present embodiment, even when the speed of the vehicle Ve traveling along the route MR exceeds the speed value Vth, it is possible to avoid the overlap of the guidance voices. Therefore, according to this embodiment, it is possible to reduce the mental burden of the user using the voice guidance for the vehicle.

Incidentally, according to this embodiment, for example, when the control unit 114 has a function as an utterance setting unit, a determination unit, and a voice overlap prevention unit, it is possible to perform substantially the same processing as the series of processing of FIG. 5 in the voice output device 100.

In the above-described embodiment, the program can be stored using various types of non-transitory computer-readable medium and supplied to a controller or the like that is a computer. The non-transitory computer-readable medium includes various types of tangible storage medium. Examples of the non-transitory computer-readable medium include a magnetic storage medium (e.g., a flexible disk, a magnetic tape, a hard disk drive), a magneto-optical storage medium (e.g., a magneto-optical disk), a CD-ROM (Read Only Memory), a CD-R, a CD-R/W, a solid-state memory (e.g., a mask ROM, a PROM (Programmable ROM), an EPROM (Erasable PROM), a flash ROM, and a RAM (Random Access Memory)).

While the present invention has been described with reference to the embodiments, the present invention is not limited to the above embodiments. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

### DESCRIPTION OF REFERENCE NUMBERS

100 Voice output device
200 Server device
111, 211 Communication unit
112, 212 Storage unit
113 Input unit
114,214 Control unit
115 Sensor group
116 Display
117 Microphone
118 Speaker
119 Outside camera
120 Inside camera

## Claims

1. A voice output device comprising:
an utterance setting unit configured to set a plurality of utterance points and a plurality of utterance contents for the plurality of utterance points, based on a route a destination of a vehicle;
a determination unit configured to determine whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and
a voice overlap prevention unit configured to perform processing for preventing overlap of the first voice output and the second voice output, based on a priority set in advance, when it is determined that the first voice output and the second voice output overlap.

2. The voice output device according to claim 1, wherein, when the speed of the vehicle traveling along the route exceeds a speed value obtained by a predetermined calculation method, the determination unit determines that the first voice output corresponding to the first utterance content at the first utterance point among the plurality of utterance points and the second voice output corresponding to the second utterance content at the second utterance point among the plurality of utterance points overlap at least partly.

3. The voice output device according to claim 2, wherein the speed value is a value obtained by dividing a distance from the first utterance point to the second utterance point by an utterance time of the first voice output.

4. The voice output device according to claim 2, wherein the voice overlap prevention unit performs, as the processing for preventing the overlap based on the priority, processing for reducing a sentence of the first utterance content until the utterance time of the first voice output falls within an expected arrival time of the vehicle to the second utterance point.

5. The voice output device according to claim 1, wherein the plurality of utterance points are set as positions indicating timings capable of performing the voice outputs corresponding to the plurality of utterance contents without overlap in the vehicle that is assumed to travel at a speed equal to or lower than a predetermined speed.

6. The voice output device according to claim 1, wherein the priority is set such that, among the first utterance point and the second utterance point, one voice output corresponding to the utterance content of one guidance point closer to the guidance point ahead of the vehicle on the route is preferentially performed.

7. The voice output device according to claim 6, wherein the voice overlap prevention unit performs, as the processing for preventing the overlap based on the priority, processing for stopping another voice output corresponding to the utterance content of another utterance point farther from the guide point at a timing when the one voice output is started, among the first utterance point and the second utterance point.

8. The voice output device according to claim 1, wherein the priority is set so that the voice output of information important for moving the vehicle along the route is preferentially performed.

9. The voice output device according to claim 8, wherein the voice overlap preventing unit performs, as the processing for preventing the overlap based on the priority, processing for shortening at least one of the first utterance content and the second utterance content.

10. A voice output method comprising:
setting a plurality of utterance points and a plurality of utterance contents for the plurality of utterance points, based on a route to a destination of a vehicle;
determining whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and
performing processing for preventing overlap of the first voice output and the second voice output, based on a priority set in advance, when it is determined that the first voice output and the second voice output overlap.

11. A program executed by a voice output device comprising a computer, the program causing the computer to:
set a plurality of utterance points and a plurality of utterance contents for the plurality of utterance points, based on a route to a destination of a vehicle;
determine whether or not a first voice output corresponding to a first utterance content at a first utterance point among the plurality of utterance points and a second voice output corresponding to a second utterance content at a second utterance point among the plurality of utterance points overlap at least partly, based on a speed of the vehicle traveling along the route; and
perform processing for preventing overlap of the first voice output and the second voice output, based on a priority set in advance, when it is determined that the first voice output and the second voice output overlap.

12. A storage medium storing the program according to claim 11.
